**Europäisches Patentamt**

**European Patent Office**

**Office européen des brevets**

(19)

(11) Veröffentlichungsnummer : **0 401 333 B1**

## (12) EUROPÄISCHE PATENTSCHRIFT

(45) Veröffentlichungstag der Patentschrift :
**04.11.92 Patentblatt 92/45**

(51) Int. Cl.$^5$ : **B62D 47/02**

(21) Anmeldenummer : **90900168.7**

(22) Anmeldetag : **20.12.89**

(86) Internationale Anmeldenummer :
**PCT/EP89/01583**

(87) Internationale Veröffentlichungsnummer :
**WO 90/06881 28.06.90 Gazette 90/15**

(54) **MEHRGLIEDRIGES FAHRZEUG, INSBESONDERE GELENKBUS.**

(30) Priorität : **22.12.88 DE 8815938 U**
**23.08.89 DE 8910106 U**
**06.10.89 DE 8911957 U**

(43) Veröffentlichungstag der Anmeldung :
**12.12.90 Patentblatt 90/50**

(45) Bekanntmachung des Hinweises auf die
Patenterteilung :
**04.11.92 Patentblatt 92/45**

(84) Benannte Vertragsstaaten :
**AT BE CH DE ES FR GB IT LI LU NL SE**

(56) Entgegenhaltungen :
**EP-A- 0 032 079**
**EP-A- 0 122 956**
**US-A- 4 781 123**

(73) Patentinhaber : **HÜBNER Gummi- und**
**Kunststoff GmbH**
**Agathofstrasse 15**
**W-3500 Kassel-Bettenhausen 1 (DE)**

(72) Erfinder : **GUMPERT, Horst, J.**
**Birkengrund 4**
**W-3320 Salzgitter 1 (DE)**

(74) Vertreter : **Walter, Helmut, Dipl.-Ing.**
**Aubinger Strasse 81**
**W-8000 München 60 (DE)**

**Beschreibung**

Die Erfindung betrifft ein mehrgliedriges Fahrzeug, insbesondere Gelenkbus, gemäß dem Gattungsbegriff des Anspruchs 1.

Bei einem Gelenkfahrzeug mit einer solchen Gelenkverbindung zwischen zwei Fahrzeuggliedern haben diese die Möglichkeit, relativ zueinander Schwenkbewegungen um die Vertikalachse des Drehkranzgelenks durchzuführen. Die am Außenring des Drehkranzgelenks angeordneten Querachsgelenke mit gemeinsamer, horizontaler Drehachse erlauben den Fahrzeuggliedern eine zusätzliche Schwenkbewegung um die horizontale Drehachse. Als dritte Bewegungskomponente kann bei mehrgliedrigen Fahrzeugen eine relative Verdrehung um die Fahrzeuglängsachse auftreten. Jedoch muß diese bisher von dem Drehkranzgelenk der Gelenkverbindung zwischen den Fahrzeuggliedern ferngehalten werden, weil die Drehkränze bisher verwendeter Bauart beschädigt oder sogar zerstört werden, wenn sie Torsionskräften ausgesetzt sind und diese auftreten, wenn sich die Fahrzeugglieder relativ zueinander verdrehen. Deshalb schreiben die Hersteller von Drehkranzgelenken vor, daß die für die Drehkranzgelenke vorgesehene Auflagekonstruktion verwindungssteif sein muß, um die Torsionskräfte aufnehmen und von den eingebauten Drehkranzgelenken fernhalten zu können. Zu diesem Zweck ist bei bekannten Gelenkfahrzeugen vorgesehen, daß einer der Ringe des Drehkranzes, meist der untere Drehkranzring, großflächig auf dem Bodengerippe des einen Fahrzeuggliedes aufliegt, während ein Querträger zwischen den Querachsgelenken angeordnet ist und dadurch diese und damit wiederum das Drehkranzgelenk von den Torsionskräften entlastet ist (EP-A 0 122 956, US-A 4.781.123, DE-A 33 40 446, DE-A 32 08 615, DE-C 28 06 543). Dies hat den Nachteil, daß die Gelenkverbindung eine große Bauhöhe hat und der vom Drehkranzgelenk umschlossene Raum nicht genutzt werden kann, beispielsweise nicht für den Einbau von Aggregaten zur Verfügung steht.

Eine Gelenkverbindung, wie sie bei Gelenkomnibussen der hier betrachteten Art typischerweise und heute allgemein auch tatsächlich angewendet wird, ist in EP-A 0 122 956, Fig. 10,11 dargestellt. Ein Grund- oder Außenring des Drehkranzgelenks ist einem der beiden Fahrzeugglieder derart fest zugeordnet, daß er auf seinem gesamten Umfang mit dem Untergestell dieses Fahrzeuggliedes fest verbunden, beispielsweise verschraubt ist, das damit Querträgerfunktion hat. Der Innenring des Drehkranzgelenks ist in zwei seitlichen Querachsgelenken, die eine gemeinsame horizontale, quergerichtete Drehachse haben, gehalten und über sie dem anderen der beiden Fahrzeugglieder zugeordnet. Um nun von diesem Fahrzeugglied ausgehende Torsionskräfte daran zu hindern, in das Drehkranzgelenk zu gelangen und dieses zu verwinden, sind die beiden Querachsgelenke über einen Träger in der Form einer Jochplatte miteinander verbunden, die zwar die ihr zugedachte Aufgabe der Freihaltung des Drehkranzgelenks von Verwindungskräften erfüllt, gleichzeitig aber die Bauhöhe der Gelenkverbindung vergrößert und vor allem den vom Drehkranzgelenk umschlossenen Raum unzugänglich macht und eine Nutzung für den Aggregateinbau unmöglicht macht, zumindest aber sehr behindert.

In der anderen, vergleichbaren Lösung gemäß DE-OS 33 40 446 ist die vorgenannte und erörterte Jochplatte als Quertraverse bezeichnet, sie erfüllt die Aufgabe, das Drehkranzgelenk von Torsionskräften freizuhalten, bringt aber eine grobe Bauhöhe der Gelenkverbindung mit sich und macht den vom Drehkranzgelenk umschlossenen Raum unzugänglich.

Während also beim Stand der Technik die Tendenz besteht, Torsionskräfte vom Drehkranzgelenk fernzuhalten, ist bei der Erfindung gemäß dem Kennzeichnungsteil des Anspruchs 1 der Außenring des Drehkranzgelenks in sich torsionssteif, er hat selbst Querträgerfunktion und der beim Stand der Technik vorgesehene zusätzliche Querträger, in welcher Form auch immer, als Quertraverse oder als Jochplatte, kommt in Wegfall.

Die Erfindung löst also die Aufgabe, die Bauhöhe der Gelenkverbindung zwischen den Fahrzeuggliedern zu verringern, die Bauweise zu vereinfachen und den vom Drehkranzgelenk umschlossenen Raum frei und frei zugänglich zu machen, so daß er zum Aggregateinbau verfügbar ist, beispielsweise zum Einbau von Aggregaten, die der Dämpfung und/oder Steuerung der Bewegungen der Drehringe des Drehkranzgelenks relativ zueinander dienen.

Die erfindungsgemäße Lösung besteht im wesentlichen darin, daß der äußere Drehkranz selbst als Querträger ausgebildet ist bzw. verwindungssteif ist und dem zufolge Querträgerfunktion hat.

Mit anderen Worten wird darauf verzichtet, einen besonderen Querträger für die torsionssteife Verbindung den seitlichen Querachsgelenke vorzusehen. Diese Aufgabe wird vielmehr dem zugehörigen Drehring zugeteilt, der entsprechend steifer ausgeführt wird.

Dies schließt nicht aus, daß für die Bildung der tragenden Teile des Querträgers einerseits und für die Bildung des Drehkranzlagers unterschiedliche Werkstoffe verwendet werden, beispielsweise in der Form, daß in den Außenring des Drehkranzes, der den Querträger bildet, ein Lagerring eingesetzt ist. Entscheidend ist, daß diese Teile des Außenrings des Drehkranzes konstruktiv und funktionell eine Einheit bilden. Dies läßt sich auch so ausdrücken, daß die an der Bildung des Drehkranzes beteiligten Elemente im Gegensatz zum Stand der Technik ihre Selbständigkeit gegenüber dem Querträger aufgegeben haben.

Da es aber vorteilhaft sein kann, wenn der Drehkranz insgesamt montierbar und austauschbar ist, kann nach einem weiteren Merkmal der Erfindung vorgesehen sein, daß zur Verbindung mit dem zugehörigen Fahrzeugteil am Außenring des Drehkranzes vorgesehene Querachsgelenkteile abnehmbar sind, indem sie beispielsweise als kugelförmige Achsstummel oder als Anschraubflansche ausgebildet sind. Dies gibt die Möglichkeit, den Drehkranz samt dem zweiten Querträger in Montage und Wartung als Einheit zu behandeln.

Zweckmäßigerweise steht der Innenring des Drehkranzes in Richtung der Vertikalachse nicht wesentlich über den Außenring vor, was zur Verringerung der Bauhöhe beiträgt. Ferner ist es in diesem Zusammenhang vorteilhaft,,wenn die Querachsgelenkteile im wesentlichen seitlich des Drehkranzes gelegen sind.

Bei mindestens einem inneren Ring des Drehkranzes kann nach der Erfindung ein innenliegender Horizontalschenkel vorgesehen sein, der als Montagefläche für Anbauteile dient, insbesondere für Drehlager von Mittelbügel oder Lagerelementen für Teile, die unter dem Drehkranz hindurch geführt werden.

Ferner ist es bekannt, über dem Gelenk eine begehbare Drehplattform anzuordnen, die von dem Gelenk oder einem der beiden Fahrzeugteile über eine Kugeldrehverbindung getragen wird. Eine solche Drehverbindung ist deshalb notwendig, weil die Drehplattform sich nach der Winkelhalbierenden zwischen den beiden Fahrzeugrichtungen einzustellen hat und daher gegenüber beiden Fahrzeugen und somit auch gegenüber beiden Drehringen des Gelenks beweglich sein muß. Die bekannte Lösung hat den Nachteil eines beträchtlichen vertikalen Platzbedarfs, der erfindungsgemäß dadurch verringert wird, daß der Drehkranz einen dritten Drehring aufweist, der die Drehplattform trägt.

Somit sind drei Einheiten jeweils gegeneinander relativ beweglich mit dem Drehkranz zu verbinden. Damit sie nicht miteinander kollidieren, ist es zweckmäßig, den dritten Drehring als inneren Drehring mit nach oben und/oder innen gerichteten Befestigungsteilen auszugestalten, während der äußere Drehring seitlich angeformte Querachsgelenkteile zur Verbindung mit einem Fahrzeugteil und der mittlere Drehring an der Unterseite des Drehkranzes gelegene Befestigungsorgane zur Verbindung mit dem anderen Fahrzeugteil aufweist.

Ein dreifacher Drehkranz ist aus der US-A 4.781.123 für die Verbindung eines Fahrzeuggelenks mit dem Drehgestell eines Schienenfahrzeugs bekannt. Dabei liegt der mittlere Ring auf einem Querträger des Drehgestells auf, der innere Ring ist um eine Querachse gelenkig mit dem einen Fahrzeugglied und der äußere Ring starr mit dem anderen Fahrzeugglied verbunden. Der Querträger des Drehgestells trägt auch die über dem Gelenk angeordnete Drehplattform über seitlich des Gelenks aufragende Stützen. Die bekannte Anordnung hat einen beträchtlichen vertikalen Raumbedarf, der durch die erfindungsgemäße Anordnung verringert wird.

Ferner wird durch die Erfindung eine Vereinfachung erzielt, wenn der dritte Drehring einen darüber angeordneten Mittelbügel trägt, der mit der Drehplattform sowie gegebenenfalls einem Mittelrahmen zur Stützung eines Faltenbalgs verbunden ist, wobei zweckmäßigerweise der Mittelbügel gegenüber dem Drehkranz querbeweglich ist. Damit die Übergangsplattform und/oder der Faltenbalg den restlichen Relativbewegungen der Fahrzeugteile um die gemeinsame Längsachse nachgeben kann, kann es zweckmäßig sein, Nachgiebigkeit zwischen dem Drehkranz und dem Mittelbügel und/oder zwischen dem Mittelbügel und der Übergangsplattform und/oder zwischen dem Mittelbügel und dem Mittelrahmen des Faltenbalgs vorzusehen. Zweckmäßig ist es ferner, in solcher Weise eine Querbeweglichkeit vorzusehen, daß die Übergangsplattform und/oder der Mittelrahmen des Faltenbalgs sich bei Kurvenfahrt auf eine andere Mittellage als die durch das Zentrum des Gelenks festgelegte einstellen kann.

Die Erfindung wird im folgenden näher unter Bezugnahme auf die Zeichnung erläutert, die vorteilhafte Ausführungsbeispiele schematisch darstellt. Es zeigen:

Fig. 1 und 2 eine schematische Seitenansicht und Draufsicht eines Drehkranzes,

Fig. 3 einen Halb-Querschnitt durch den Drehkranz gemäß Fig. 2, untere Hälfte,

Fig. 4 einen Halb-Querschnitt durch eine Ausführungsvariante des Drehkranzes,

Fig. 5 einen Teilschnitt aus Fig. 1,

Fig. 6 eine schematische Seitenansicht des Verbindungsbereichs zweier Fahrzeugteile,

Fig. 7 einen Teilquerschnitt eines Drehkranzes zur Verwendung in der Anordnung gemäß Fig. 6,

Fig. 8 einen Querschnitt durch die Ausführung gemäß Fig. 6 und

Fig. 9 einen Horizontalschnitt durch die Ausführung gemäß Fig. 8.

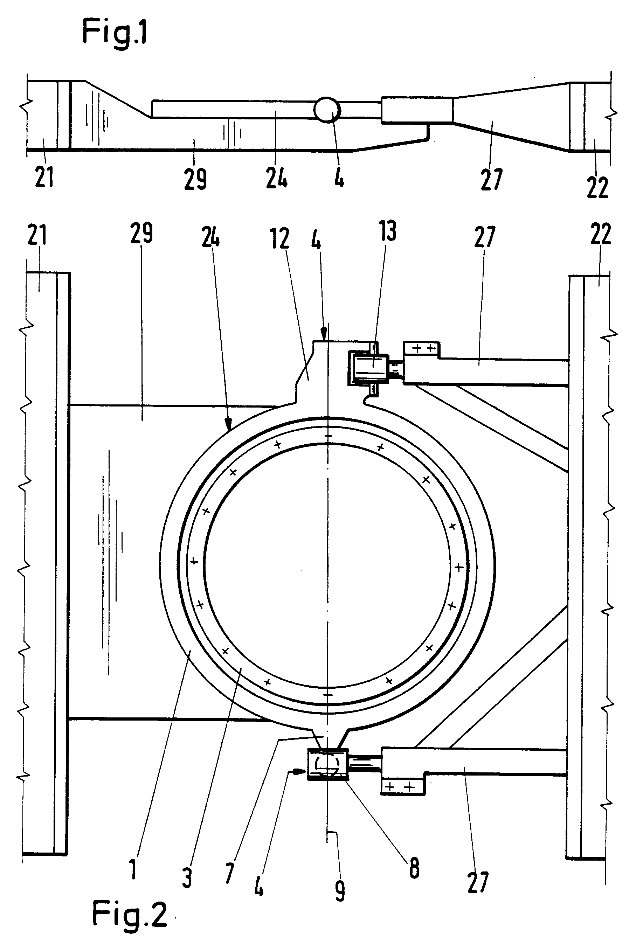

Die Fahrzeugteile 21 und 22, bei denen es sich um Vorderwagen und Nachläufer eines Gelenkomnibusses handeln kann, sind durch ein Drehgelenk miteinander verbunden, das in der Ausführung gemäß Fig. 1 bis 5 einen Drehkranz 24 umfaßt, der aus einem Außenring 1 und einem Innenring 3 besteht. Der Innenring 3 liegt auf dem Rahmenteil 29 als Querträger auf, der starr mit dem Fahrzeugteil 21 verbunden ist. Da der Rahmenteil 29 hinreichende Quersteifigkeit aufweist, braucht der Innenring 3 - wie üblich - keine wesentliche Eigensteifigkeit aufzuweisen.

Der Außenring 1 ist mit Querachsgelenkteilen 4 verbunden, von denen in der oberen und unteren Hälfte der Fig. 2 unterschiedliche Ausführungen gezeigt sind. Selbstverständlich werden in der Praxis in der Regel gleiche Querachsgelenkteile zu beiden Seiten des Drehkranzes verwendet.

Das Querachsgelenk im Ausführungsbeispiel der unteren Hälfte der Fig. 2 umfaßt einen in einer Gelenkkugel endenden, fest mit dem Außenring 1 verbundenen Achsstummel 7. Die Gelenkkugel ist von einer Gelenkschale 8 umfaßt, die starr an einem Rahmenteil 27 des Fahrzeugteils 22 angeordnet ist. Diese Teile bilden gemeinsam mit den an der anderen Drehkranzseite vorzustellenden, übereinstimmenden Gelenkteilen ein um die horizontale Querachse 9 verschwenkbares Querachsgelenk.

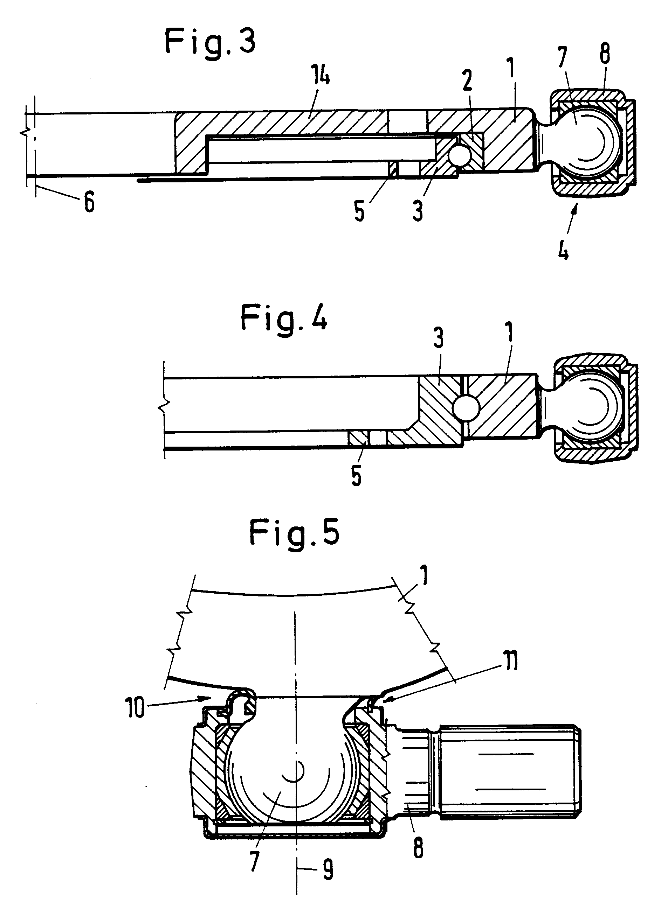

Für die Detailausführung kann auf herkömmliche Gelenkkonstruktionen zurückgegriffen werden, wie beispielsweise in Fig. 5 dargestellt, in der beiderseits der Achse 9 unterschiedliche Dichtungsausführungen 10 und 11 veranschaulicht sind.

In der oberen Hälfte der Fig. 2 ist eine Variante des Querachsgelenks dargestellt, in welcher an dem Außenring 1 ein Anschraubflansch 12 angeflanscht ist, an dem ein im Handel befindliches Nachläufergelenk 13 angeschraubt ist, das seinerseits wiederum mit den starren Rahmenteilen 27 des Fahrzeugteils 22 fest verbunden ist.

Zwei alternative Ausführungen des Drehkranzes zur Verwendung in der Anordnung gemäß Fig. 1 und Fig. 2 ergeben sich aus Fig. 3 und 4. In der Ausführung gemäß Fig. 3 ist der Außenring 1, der zur Bildung der Kugelbahn einen Lagerring 2 enthält, tellerförmig radial nach innen geführt zur Bildung eines Horizontalschenkels 14, der als Montagefläche für weitere Anbauteile dienen kann und dem Außenring eine so große Steifigkeit verleiht, daß er die zwischen den Achsstummeln 7 wirkenden Torsionskräfte übertragen kann. Der Außenring 1 des Drehkranzes bildet auf diese Weise den oben als zweiter Querträger bezeichneten Teil, indem er hinreichend zur Aufnahme sämtlicher Kräfte bemessen ist, die über die Querachsgelenke oder vom Innenring 3 der über den Lagerring 2 auf ihn übertragen werden können.

Dazu bedarf es nicht der tellerartigen Verbreiterung nach innen gemäß Fig. 3. Beispielsweise ist der Außenring 1 gemäß Fig. 4 in sich mit hinreichender Steifigkeit ausgeführt.

Der Innenring 3 des Drehkranzes ist in herkömmlicher Weise mit einem radial nach innen ragenden Flansch 5 verbunden, der zur Verbindung mit dem Rahmenteil 29 (Fig. 1 und 2) als erstem Querträger vorgesehen ist. Er ragt in Richtung der Vertikalachse 6 nur wenig über den Außenring 1 vor, so daß die gesamte Bauhöhe gering ist.

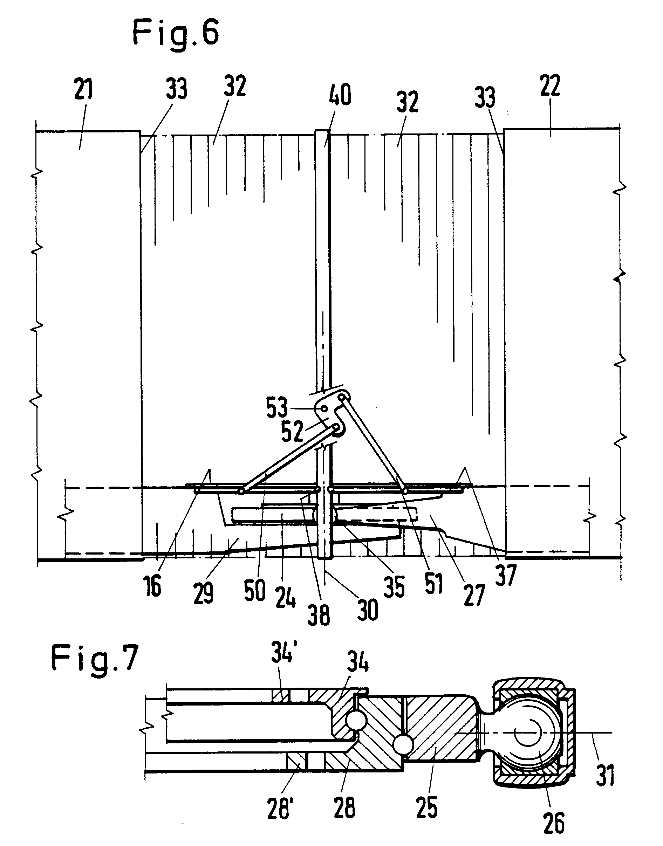

Im Ausführungsbeispiel gemäß Fig. 6 bis 9 sind die Fahrzeugglieder 21 und 22 durch ein Drehgelenk 23 miteinander verbunden, das einen Drehkranz 24 umfaßt, dessen äußerer Ring 25 seitlich angeformte Querachslager 26 zur Verbindung mit dem Rahmenteil 27 des Fahrzeugglieds 22 aufweist und dessen weiter innen liegender Ring 28 mit dem Rahmenteil 29 des Fahrzeugglieds 21 über einen an der Unterseite des Drehkranzes freiliegenden Befestigungsflansch 28' starr verbunden ist. Die Fahrzeugteile 21 und 22 haben dadurch die Möglichkeit einer Schwenkung um die Vertikalachse 30 sowie um eine Querachse 31. Der Drehkranz 24 ist durch einen dritten, inneren Drehring 34 ergänzt, der den Mittelbügel 35 sowie die aus den zwei Hälften 36 und 37 bestehende Drehplattform mittels eines nach radial innen ragenden und an der Oberseite des Drehkranzes freiliegenden Befestigungsflansches 34' trägt. Die Drehplattformhälften 36, 37 sind durch die Scharniere 38 um eine parallel zur Querachse 31 verlaufende Achse schwenkbar und auf Rahmenteilen abgestützt, die fest mit den Fahrzeuggliedern 1 bzw. 2 verbunden sind.

Der Mittelbügel 35 trägt über Torsionsgelenke 39 den Mittelrahmen 40. Der den Zwischenraum zwischen den Stirnflächen 33 der Fahrzeugglieder 21, 22 überbrückende Balg 32 ist in zwei Hälften aufgeteilt, die einerseits an den Fahrzeugstirnflächen 33 und andererseits an dem Mittelrahmen gestützt und geführt sind.

Der Querträger 35 ist an dem dritten Drehkranzring 34 zweckmäßigerweise fest angeschraubt. Der Zentrumsbereich des Drehkranzes bleibt dadurch für die Aufhängung und Durchführung anderer Bauteile frei, und es ergibt sich eine sehr flache Bauweise.

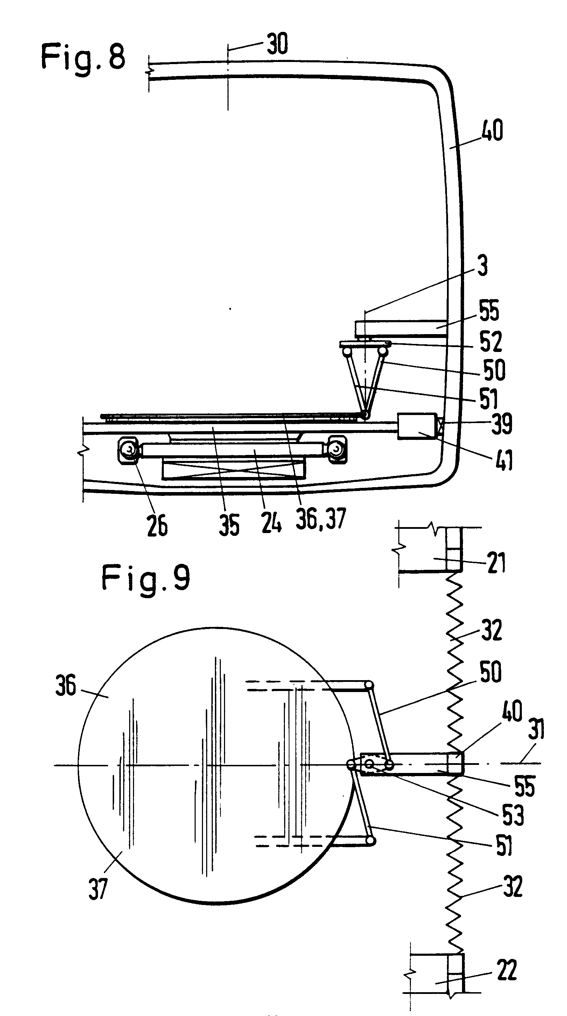

Dem Mittelrahmen wird in der Ausführung gemäß Fig. 8 und 9 eine Querverschiebung durch ein Verschiebelager 41 ermöglicht, das an den beiden Enden des Mittelbügels 35 vorgesehen ist und diesen (über das Torsionslager 39) mit dem Mittelrahmen 40 verbindet. Stattdessen kann auch eine Anordnung gewählt werden, bei der an dem Drehkranz 24 (genauer: an dem inneren Drehkranzring 34) eine Querführung fest angeordnet ist, an der der Mittelbügel 35 insgesamt verschiebbar ist.

Es kann eine bekannte und deshalb hier nicht dargestellte und beschriebene Vorrichtung vorgesehen sein, die den Mittelbügel in bezug auf Schwenkbewegungen der Fahrzeugglieder um die Hochachse 30 stets auf die Winkelhalbierende zwischen den Stirnflächen 33 einstellt.

Eine Führung des Mittelrahmens ist auch im Hinblick auf Relativbewegungen der Fahrzeugglieder um die Querachse 31 erforderlich. In einfachen Fällen wird die Vertikalachse des Mittelbügels einfach parallel zur Stirnfläche eines der beiden Fahrzeugglieder gehalten.

Bevorzugt wird jedoch eine Lösung, bei der in folgender Weise eine Zwangsführung stattfindet. Mit den vorderen und hinteren Hälften 16, 17 der Drehplattform sind Steuerstangen 50, 51 gelenkig verbunden, deren andere Enden gelenkig an den Enden eines Doppelhebels 52 angreifen, dessen Mitte an dem Mittelrahmen 40 oder einem damit fest verbundenen Teil über Lager 53 fest verbunden ist. Die Anordnung hat die Wirkung, daß auch bei Relativbewegungen um die Querachse des Gelenks der Mittelrahmen 40 stets in Richtung der Winkelhalbierenden zwischen den Stirnflächen 33 gehalten wird.

Es ist ohne weiteres erkennbar, daß es auf die Lage der Schwenkachse 53 nicht ankommt. Sie braucht nicht horizontal angeordnet zu sein, wie dies in den Fig. 6 angenommen ist, sondern kann auch gemäß Fig. 8 und 9 vertikal stehen.

**Patentansprüche**

1. Mehrgliedriges Fahrzeug, insbesondere Gelenkomnibus, mit einer Gelenkverbindung zwischen zwei Fahrzeuggliedern (21,22), die Schwenkbewegungen der beiden Fahrzeugglieder (21,22) um eine Hochachse (30) und um eine horizontale Querachse (9) ermöglicht, und die Torsionskräften ausgesetzt ist, die auftreten, wenn sich die beiden Fahrzeugglieder (21,22) um eine horizontale Längsachse (31) relativ zueinander bewegen, wobei die Gelenkverbindung ein Drehkranzgelenk (24) mit zwei um die Hochachse (30) der Gelenkverbindung gegeneinander verstellbaren Ringen (1,3) und Querachsgelenke (4) mit der horizontalen Querachse (9) aufweist, wobei weiter der Innenring (3) des Drehkranzgelenks (24) über einen Querträger (29) dem einen (21) der beiden Fahrzeugglieder (21,22) zugeordnet ist, um Torsionskräfte vom Drehkranzgelenk (24) fernzuhalten und wobei schließlich der Außenring (1) des Drehkranzgelenks (24) dem anderen (22) der beiden Fahrzeugglieder (21,22) über die Querachsgelenke zugeordnet ist, **dadurch gekennzeichnet, daß** der Außenring (1) des Drehkranzgelenks (24) in sich torsionssteif ausgebildet ist und der vom Drehkranzgelenk (24) umschlossene Raum durch das Fehlen von den Außenring (1) versteifenden Bauteilen unbehindert zugänglich ist.

2. Fahrzeug nach Anspruch 1, dadurch gekennzeichnet, daß der Außenring (1) des Drehkranzes einen Lagerring (2) enthält.

3. Fahrzeug nach Anspruch 2, dadurch gekennzeichnet, daß der Innenring (3) des Drehkranzes in Richtung der Vertikalachse (6) nicht wesentlich über den Außenring (1) vorsteht.

4. Fahrzeug nach einem der Ansprüche 1 bis 3, dadurch gekennzeichnet, daß die Querachsgelenkteile (4, 26) im wesentlichen seitlich des Drehkranzes gelegen sind.

5. Fahrzeug nach einem der Ansprüche 1 bis 4, dadurch gekennzeichnet, daß die Querachsgelenkteile (13) von dem äußeren Drehkranz lösbar sind.

6. Fahrzeug nach einem der Ansprüche 1 bis 5, dadurch gekennzeichnet, daß bei mindestens einem Ring des Drehkranzes ein innen liegender Horizontalschenkel (5, 14) als Montagefläche für Anbauteile angeordnet ist.

7. Fahrzeug, insbesondere nach einem der Ansprüche 1 bis 6, dadurch gekennzeichnet, daß der Drehkranz einen dritten Drehring (34) aufweist, der eine Drehplattform trägt.

8. Fahrzeug nach Anspruch 7, dadurch gekennzeichnet, daß der dritte Drehring (34) nach innen und/oder oben gerichtete Befestigungsorgane (34') aufweist.

9. Fahrzeug nach Anspruch 8, dadurch gekennzeichnet, daß der mittlere Drehring (28) auf der Unterseite des Drehkranzes gelegene Befestigungsorgane (28') zur Verbindung mit dem anderen Fahrzeugglied (21) aufweist.

10. Fahrzeug nach einem der Ansprüche 7 bis 9, dadurch gekennzeichnet, daß der dritte Drehring (34) einen Mittelbügel trägt, der mit der Drehplattform verbunden ist.

11. Fahrzeug nach Anspruch 10, dadurch gekennzeichnet, daß der Mittelbügel (35) gegenüber dem Drehkranz (24) querbeweglich ist.

12. Fahrzeug nach einem der Ansprüche 7 bis 11, dadurch gekennzeichnet, daß die Drehplattform einen Faltenbalg mit Mittelrahmen (40) umfaßt, der von dem Mittelbügel (35) gestützt ist.

13. Fahrzeug nach einem der Ansprüche 7 bis 12, dadurch gekennzeichnet, daß der Mittelrahmen (40) nachgiebig mit dem Mittelbügel (25) verbunden ist.

14. Fahrzeug nach einem der Ansprüche 7 bis 13, dadurch gekennzeichnet, daß der Mittelbügel (25) einen Mittelteil, der in Querrichtung fest mit dem Drehring (24) verbunden ist, und Seitenteile aufweist, die von dem Mittelteil querbeweglich geführt sind.

**Claims**

1. A multi-unit vehicle, more particularly an articulated bus, having an articulated connection between two vehicle units (21, 22) to permit pivoting movements of the two vehicle units (21, 22) about a vertical axis (30) and about a horizontal transverse axis (9), said connection being subject to torsional forces occurring when the two vehicle units (21, 221) move relatively to one another about a horizontal longitudinal axis (31), the articulated connection comprising a ring mount (24) having two rings (1, 3) movable relatively to one another about the vertical axis (30) of the articulated connection, and transverse-axis articulations (4) having the horizontal transverse axis (9), the inner ring (3) of the ring mount (24) also being associated with one (21) of the two vehicle units (21, 22) by way of a cross-member (29) in order to keep torsional forces away from the ring mount (24) and the outer ring (1) of the ring mount (24) being associated with the other (22) of the two vehicle units (21, 22) by way of the transverse-axis articulations, characterised in that the outer ring (1) of the ring mount (24) is constructed so as to be torsionally stiff of itself and the area enclosed by the ring mount is unobstructedly accessible due to the absence of components to stiffen the outer ring (1).

2. A vehicle according to claim 1, characterised in that the outer ring (1) of the ring mount contains a bearing ring (2).

3. A vehicle according to claim 2, characterised in that the inner ring (3) of the ring mount does not project appreciably beyond the outer ring (1) in the direction of the vertical axis (6).

4. A vehicle according to any one of claims 1 to 3, characterised in that the transverse-axis articulation parts (4, 26) are situated substantially laterally of the ring mount.

5. A vehicle according to any one of claims 1 to 4, characterised in that the transverse axis articulation parts (13) are releasable from the outer ring mount.

6. A vehicle according to any one of claims 1 to 5, charactrised in that an inwardly situated horizontal limb (5, 14) is arranged as a fitting surface for attachments in the case of at least one ring of the ring mount.

7. A vehicle, more particularly according to any one of claims 1 to 6, characterised in that the ring mount has a third rotary ring (34) which carries a rotary platform.

8. A vehicle according to claim 7, characterised in that the third rotary ring (34) has inwardly and/or upwardly directed fixing means (34′).

9. A vehicle according to claim 8, characterised in that the middle rotary ring (28) has fixing means (28′) situated on the underside of the ring mount for connection to the other vehicle unit (21).

10. A vehicle according to any one of claims 7 to 9, characterised in that the third rotary ring (34) carries a central yoke connected to the rotary platform.

11. A vehicle according to claim 10, characterised in that the central yoke (35) is transversely movable relative to the ring mount (24).

12. A vehicle according to any one of claims 7 to 11, characterised in that the rotary platform comprises a concertina-type bellows with a central frame (40) supported by the central yoke (35).

13. A vehicle according to any one of claims 7 to 12, characterised in that the central frame (40) is resiliently connected to the central yoke (35).

14. A vehicle according to any one of claims 7 to 13, characterised in that the central yoke (35) comprises a central part rigidly connected to the rotary ring (24) in the transverse direction, and side parts guided by the central part for transverse movement.

## Revendications

1 - Véhicule à éléments multiples, notamment autobus articulé, comportant une liaison articulée entre deux éléments de véhicule (21, 22), cette liaison permettant des mouvements de pivotement des deux éléments de véhicule (21, 22) autour d'un axe vertical (30) et d'un axe horizontal transversal (9) et étant soumise à des efforts de torsion qui se produisent lorsque les deux éléments de véhicule (21, 22) se déplacent l'un par rapport à l'autre autour d'un axe longitudinal horizontal (31), la liaison articulée comportant une articulation à couronnes rotatives (24) qui présente deux couronnes (1, 3) mobiles l'une par rapport à l'autre autour de l'axe vertical (30) de la liaison articulée et des articulations d'axe horizontal (4) suivant l'axe horizontal transversal (9), la couronne intérieure (3) de l'articulation à couronnes rotatives (24) étant en outre associée par l'intermédiaire d'un support transversal (29) à l'un (21) des deux éléments de véhicule (21, 22) pour mettre l'articulation à couronnes rotatives (24) à l'abri des efforts de torsion, la couronne extérieure (1) de l'articulation à couronnes rotatives (24) étant enfin associée à l'autre (22) des deux éléments de véhicule (21, 22) par l'intermédiaire des articulations d'axe transversal, caractérisé en ce que la couronne extérieure (1) de l'articulation à couronnes rotatives (24) est constituée pour être rigide à la torsion par elle-même, le volume entouré par l'articulation à couronnes rotatives (24) étant alors accessible sans entraves en raison de l'absence d'éléments de construction raidissant la couronne extérieure (1).

2 - Véhicule selon la revendication 1, caractérisé en ce que la couronne extérieure (1) de l'articulation à couronnes rotatives contient un anneau de roulement (2).

3 - Véhicule selon la revendication 2, caractérisé en que la couronne intérieure (3) de l'articulation à couronnes rotatives est en saillie d'une faible côte, suivant la direction de l'axe vertical (6), sur la couronne extérieure (1).

4 - Véhicule selon l'une des revendications 1 à 3, caractérisé en ce que les éléments d'articulation d'axe transversal (4, 26) sont essentiellement disposés latéralement à l'articulation à couronnes rotatives.

5 - Véhicule selon l'une des revendications 1 à 4, caractérisé en ce que les éléments d'articulation d'axe transversal (13) peuvent être démontés de la couronne rotative extérieure.

6 - Véhicule selon l'une des revendications 1 à 5, caractérisé en ce que sur au moins une couronne de l'articulation à couronnes rotatives est disposée une traverse horizontale située à l'intérieur (5, 14) servant de surface de montage pour des éléments de construction.

7 - Véhicule, notamment selon l'une des revendications 1 à 6, caractérisé en ce que l'articulation à couronnes rotatives comporte une troisième couronne rotative (34) portant une plate-forme rotative.

8 - Véhicule selon la revendication 7, caractérisé en ce que la troisième couronne rotative (34) comporte des organes de fixation (34') dirigés vers l'intérieur et/ou vers le haut.

9 - Véhicule selon la revendication 8, caractérisé en ce que la couronne rotative médiane (28) comporte des organes de fixation (28') disposés sur la partie inférieure de cette couronne rotative et destinés à être reliés à l'autre élément de véhicule (21).

10 - Véhicule selon l'une des revendications 7 à 9, caractérisé en ce que la troisième couronne rotative (34) porte un étrier médian assemblé avec la plate-forme rotative.

11 - Véhicule selon la revendication 10, caractérisé en ce que l'étrier médian (35) peut être déplacé transversalement par rapport à l'articulation à couronnes rotatives (24).

12 - Véhicule selon l'une des revendications 7 à 11, caractérisé en ce que la plate-forme rotative comprend un soufflet muni d'un cadre médian (40) soutenu par l'étrier médian (35).

13 - Véhicule selon l'une des revendications 7 à 12, caractérisé en ce que le cadre médian (40) est assemblé élastiquement avec l'étrier médian (35).

14 - Véhicule selon l'une des revendications 7 à 13, caractérisé en ce que l'étrier médian (35) comporte une partie centrale qui est assemblée avec l'articulation à couronnes rotatives (24) rigidement en direction transversale ainsi que des parties latérales guidées pour se déplacer transversalement par la partie centrale.

Fig.1

21  29  24  4  27  22

29  24  12  4  13  27  22

21

1  3  7  4  9  8  27

Fig.2

Fig.3

Fig.4

Fig.5

## Fig.6

## Fig.7

**Fig. 8**

**Fig. 9**